# EUROPÄISCHE PATENTSCHRIFT

(11) **EP 0 963 264 B1**
(45) Veröffentlichungstag und Bekanntmachung des Hinweises auf die Patenterteilung: **02.01.2002**
(21) Anmeldenummer: 98904124.9
(22) Anmeldetag: 23.01.1998
(51) Int. Cl.: B22D 19/00

(54) **VERFAHREN ZUR HERSTELLUNG EINES GEHÄUSEBLOCKS FÜR EIN HYDRAULIKAGGREGAT UND DER GEHÄUSEBLOCK**
PROCESS FOR MANUFACTURING THE HOUSING BLOCK FOR A HYDRAULIC AGGREGATE AND THE HOUSING BLOCK
PROCEDE DE FABRICATION D'UN BLOC CARTER POUR UN AGREGAT HYDRAULIQUE ET LE BLOC CARTER

(30) Priorität: 30.01.1997 DE 19703399
(43) Veröffentlichungstag der Anmeldung: 15.12.1999
(73) Patentinhaber: Continental Teves AG & Co. oHG, 60488 Frankfurt (DE)
(72) Erfinder: BURGDORF, Jochen, D-63075 Offenbach (DE); VOLZ, Peter, D-64291 Darmstadt (DE); BIRKENBACH, Alfred, D-65795 Hattersheim (DE)
(86) Internationale Anmeldenummer: EP9800355
(87) Internationale Veröffentlichungsnummer: WO9833611

(56) Entgegenhaltungen:
- DE-A- 2 854 958
- DE-A- 3 835 383
- DE-A- 4 234 013
- DE-A- 4 442 792
- GB-A- 581 912
- GB-A- 583 638
- GB-A- 2 001 564
- KAUFMANN H: "ENDABMESSUNGSNAHES GIESSEN: EIN VERGLEICH VON SQUEEZE-CASTING UND THIXOCASTING" GIESSEREI, Bd. 81, Nr. 11, 6.Juni 1994, DÜSSELDORF, DE, Seiten 342-350, XP000450309

## Beschreibung

Die Erfindung betrifft ein Verfahren zur Herstellung eines Gehäuseblocks für ein Hydraulikaggregat mit Bohrungen zur Aufnahme von Ventileinsätzen und mit einer die Lauffläche für den Kolben einer Kolbenpumpe bildenden Zylinderbohrung und einen derartigen Gehäuseblock.

Aus der DE 42 34 013 ist es bekannt, verschiedene Komponenten, Hydraulikpumpe, Steuerventile, Speicher- und Dämpfungsräume, eines Hydraulikaggregats, für eine schlupfgeregelte Bremsanlage in einem gemeinsamen Gehäuseblock anzuordnen und durch Bohrungen in dem Gehäuseblock miteinander zu verbinden. An den Werkstoff des Gehäuseblocks werden hierbei eine Reihe von unterschiedlichen Anforderungen gestellt, die mit einem einzigen Gehäusewerkstoff nicht optimal erfüllt werden können. So erfordert beispielsweise die Befestigung der Ventilelemente durch Verstemmen einen zähen, hochfesten und bearbeitungsfreundlichen Werkstoff, die Zylinderbohrung der Kolbenpumpe hingegen eine Oberfläche aus einem reibungsarmen und verschleißfesten Werkstoff. Eine verschleißfeste und reibungsarme Oberfläche läßt sich aber mit einem zähen, bearbeitungsfreundlichen Werkstoff nur unzureichend erzielen.

Es ist weiterhin bekannt, eine besonderen Verschleißanforderungen unterliegende Oberfläche eines metallischen Werkstücks mit einer korrosions- und verschleißschützenden Oxidschicht zu versehen. In der DE 44 42 792 A1 ist ein solches Verfahren angegeben, bei dem das einen Ventilaufnahmekörper bildende Werkstück als Anode in einem Elektrolyten unter konstanten oder pulsierenden Gleichstrom gesetzt wird. Dieses Verfahren hat jedoch den Nachteil, daß die hierbei gebildete, spröde Oxidschicht auch dort gebildet wird, wo sie unerwünscht ist und die weitere Bearbeitung des Werkstücks stört. Die entsprechenden Partien des Werkstücks müssen daher abgedeckt und mit Hilfsanoden versehen werden, um dort die Ausbildung der Oxidschicht zu hemmen. Das Anbringen von Abdeckungen und Hilfsanoden macht aber das Verfahren aufwendig und teuer.

Aus der DE-A-2854958 ist bereits ein Verfahren zum Herstellen von als Zylinderblöcken für Verbrennungskraftmaschinen ausgeführten Gehäuseblöcken bekannt geworden, das auf dem Verbundgießen unterschiedlicher Aluminiumlegierungen basiert. Hierzu wird der Gehäuseblock aus einer bearbeitungsfreundlichen Gußlegierung geformt und die Zylinderlaufflächen werden durch eingegossene Buchsen realisiert.

Der Erfindung liegt die Aufgabe zugrunde, ein Verfahren zur Herstellung eines Gehäuseblocks für ein Hydraulikaggregat sowie einen Gehäuseblock nach den Oberbegriffen der Ansprüche 1 und 6 derart anzugeben, daß eine besonders wirtschaftliche Herstellung des Gehäuseblocks gewährleistet ist, wobei der Gehäuseblock zähe, hochfeste, leichte und bearbeitungsfreundliche Eigenschaften aufweisen soll, während eine Zylinderbohrung zur Aufnahme einer Kolbenpumpe im Gehäuseblock möglichst reibungsarm und verschleißfest sein soll.

Erfindungsgemäß wird diese Aufgabe durch die Merkmale der Ansprüche 1 und 6 gelöst.

Die Erfindung verbindet die Vorteile eines hochproduktiven Gießverfahrens zum Gießen von Bauteilen mit größerer Wandstärke mit dem Eingießen eines Einlegeteils zur Erfüllung zusätzlicher örtlicher Funktionsanforderungen. Das Gießverfahren gewährleistet ein porenfreies, hydraulisch dichtes Gußstück und die Legierungen des Gehäuseblocks und des Einlegeteils sind so aufeinander abgestimmt, daß eine innige und druckdichte Verbindung zwischen dem Einlegeteil und dem Gehäuseblock entsteht, die unempfindlich gegen Temperaturschwankungen ist.

Um die hohen Gießdrücke beim Squeeze-Casting oder Tixo-Casting aufnehmen zu können, wird als Einlegeteil vorzugsweise ein Massivkörper, z.B. ein zylindrischer Stab verwendet, in dem nach dem Eingießen die Zylinderbohrung hergestellt wird. Ein anderer Vorschlag der Erfindung sieht vor, als Einlegeteil eine Hülse zu verwenden, wobei in die Bohrung der Hülse ein Stützkörper eingesetzt oder ein leicht entfernbares, druckfestes Material eingefüllt wird. Durch diese Verfahrensweise kann der Bearbeitungsaufwand zur Herstellung der Zylinderbohrung reduziert bzw. für das Einlegeteil auch ein schwer zu bearbeitender Werkstoff mit günstigen Verschleiß- und Gleiteigenschaften gewählt werden.

Zur Erläuterung des erfindungsgemäßen Verfahrens werden nachfolgend zwei Anwendungsbeispiele näher beschrieben, die in der Zeichnung dargestellt sind. Es zeigen
- Figur 1: eine erste Seitenansicht, teilweise geschnitten, eines Rohlings zur Herstellung eines Gehäuseblocks,
- Figur 2: einen Querschnitt des Rohlings entlang der Linie A-A in Figur 1,
- Figur 3: eine zweite Seitenansicht des Rohlings gemäß Figur 1 und
- Figur 4: einen Querschnitt durch eine andere Ausführungsform des Rohlings für einen Gehäuseblock.

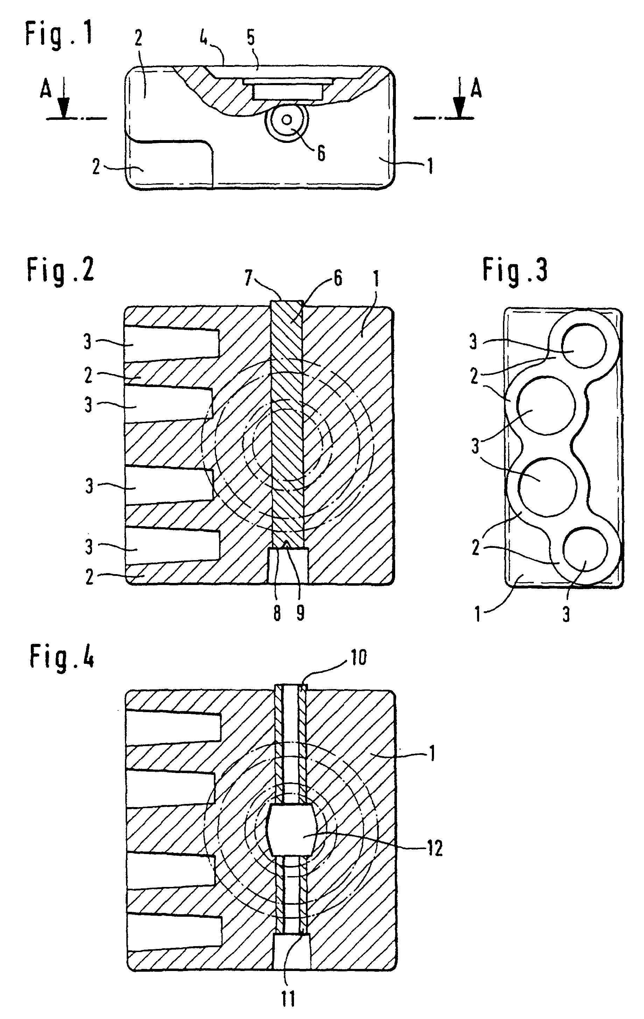

Der in den Figuren 1 bis 3 dargestellte Rohling 1 hat die Form eines Quaders, der an einer Längsseite vier hohlzylindrische, ineinander übergehende Stutzen 2 trägt. Die Bohrungen 3 der Stutzen 2 sind zur Aufnahme von Ventileinsätzen bestimmt. Auf seiner Oberseite 4 weist der Rohling 1 eine Vertiefung 5 auf, in die zum Einsetzen der Lagerung und des Antriebs einer Kolbenpumpe nachgearbeitet wird. Zur Herstellung der Wand der Zylinderbohrung für die Kolbenpumpe ist in den Rohling 1 ein Einlegeteil 6 in Form eines zylindrischen Stabs eingegossen. Ein Ende 7 des Einlegeteils 6 ragt aus dem Rohling 1 heraus und kann dadurch ein einer Aufnahmebohrung der Gießform positionsgenau gehalten werden. Das andere Ende 8 des Einlegeteils 6 befindet sich am Boden einer in den Rohling gegossenen Sackbohrung und ist mit einer Zentrierbohrung 9 versehen, in die eine Zentrierspitze der Gießform eingreift. Beide Enden des Einlegeteils 6 können aber auch in gleicher Weise auf die eine oder andere vorgenannte Art in der Gießform gehalten sein. Zur Herstellung des Einlegeteils 6 wird ein Strangpressprofil verwendet, das aus einer verschleißfesten Aluminiumlegierung, z.B. der Legierung mit der Handelsbezeichnung Alcoa Deltalloy 4032 besteht. Für den Rohling 1 wird eine hydraulisch dichte Aluminiumguß- oder Knetlegierung verwendet.

Das Gießen des Rohlings 1 erfordert ein modifiziertes Druckgießverfahren, um bei den teilweise großen Wandstärken des Rohlings Porositäten und Lunkerbildung zu vermeiden. Besonders geeignet ist das Squeeze-Casting-Verfahren. Hierbei wird die Gießform mit einer exakt bemessenen Schmelzmenge mittels einer an die Gießform angedockten Kolbenfüll-vorrichtung langsam gefüllt und nach der vollständigen Befüllung der Form schlagartig ein Nachdruck von bis zu 700 bar aufgebaut, der das Gußteil verdichtet und eine rasche Erstarrung aufgrund des guten Wärmeübergangs zum Stahl der Gießform zur Folge hat. Mit diesem Verfahren werden porenfreie Gußrohlinge erzeugt, die den Endabmessungen nahe kommen und leicht zu bearbeiten sind.

Figur 4 zeigt eine abgewandelte Ausführungsform des Rohlings 1, bei der zur Bildung der Wand der Zylinderbohrung zwei Einlegeteile 10, 11 vorgesehen sind, die aus einem hülsenförmigen, zylindrischen Strangpreßprofil aus einer verschleißfesten Aluminiumlegierung bestehen. Zwischen den Einlegeteilen 10, 11 ist eine sich an die Vertiefung 5 anschließende Ausnehmung 12 vorgesehen, die durch einen entsprechend geformten Ansatz der Gießform gebildet wird. Um zu vermeiden, daß die hohlen Einlegeteile 10, 11 durch die hohen Drücke beim Gießen verformt oder zusammengedrückt werden, werden die Bohrungen der Einlegeteile 10, 11 zuvor mit einem druckfesten Material ausgefüllt, das sich bei der späteren mechanischen Bearbeitung leicht entfernen läßt.

Beispielsweise kann ein Stab in die Bohrungen der Einlegeteile 10, 11 gesteckt werden, dessen Enden in Bohrungen in der Gießform gehalten sind und der nach dem Gießen herausgezogen wird. Der Stab kann dabei auch zur Halterung der Einlegeteile in der Gießform dienen.

### Bezugszeichenliste:

- 1: Rohling
- 2: Stutzen
- 3: Bohrungen
- 4: Oberseite
- 5: Vertiefung
- 6: Einlegeteil
- 7: Ende
- 8: Ende
- 9: Zentrierbohrung
- 10: Einlegeteil
- 11: Einlegeteil
- 12: Ausnehmung

## Patentansprüche

1. Verfahren zur Herstellung eines Gehäuseblocks für ein Hydraulikaggregat
- mit Bohrungen (3) zur Aufnahme von Ventileinsätzen
- mit einer die Lauffläche für den Kolben einer Kolbenpumpe bildenden Zylinderbohrung, **dadurch gekennzeichnet,**
**daß** ein Rohling (1) für den Gehäuseblock in einem modifizierten Druckgießverfahren durch Squeeze-Casting oder Tixo-Casting aus einer zähen, hochfesten und bearbeitungsfreundlichen Aluminium-Gußlegierung oder Aluminium-Knetlegierung geformt wird,
**daß** die Wand der Zylinderbohrung durch ein im Rohling (1) eingegossenes stab- oder hülsenförmiges Einlegeteil (6; 10, 11) gebildet wird, das aus einem reibungsarmen und verschleißfesten Strangpreßprofil besteht,
und **daß** nach dem Gießen des Rohlings (1) auf der Oberseite des Rohlings (1) eine Vertiefung eingeformt wird, die zum Einsetzen einer Lagerung und eines Antriebs für die Kolbenpumpe anschließend nachgearbeitet wird.

2. Verfahren nach Anspruch 1, **dadurch gekennzeichnet, daß** für das Einlegeteil (6; 10, 11) eine Aluminiumlegierung, insbesondere ein Werkstoff mit oder ähnlich der Handelsbezeichnung Al 4032, Al 4147, Al Si 17, Al Si 12 oder Kayser DHT 3 verwendet wird.

3. Verfahren nach einem der vorhergehenden Ansprüche, **dadurch gekennzeichnet, daß** als Einlegeteil (6) ein Massivkörper, insbesondere ein zylindrischer Stab verwendet wird, in dem nach dem Eingießen die Zylinderbohrung hergestellt wird.

4. Verfahren nach einem der vorhergehenden Ansprüche, **dadurch gekennzeichnet, daß** als Einlegeteil (10, 11) eine Hülse verwendet wird, wobei in die Bohrung der Hülse ein Stützkörper eingesetzt wird.

5. Verfahren nach einem der vorhergehenden Ansprüche, **dadurch gekennzeichnet, daß** in die Bohrung der Hülse ein nach dem Gießen leicht entfernbares, druckfestes Material eingefüllt wird.

6. Gehäuseblock für ein Hydraulikaggregat, mit Bohrungen (3) zur Aufnahme von Ventileinsätzen und mit einer die Lauffläche für den Kolben einer Kolbenpumpe bildenden Zylinderbohrung, **dadurch gekennzeichnet, daß** der Gehäuseblock aus einem Rohling (1) hergestellt ist, der in einem modifizierten Druckgießverfahren durch Squeeze-Casting oder Tixo-Casting, aus einer zähen, hochfesten und bearbeitungsfreundlichen Aluminium-Guß- oder- Knetlegierung geformt ist, daß die Wand der Zylinderbohrung durch ein eingegossenes stab- oder hülsenförmiges Einlegeteil (6; 10, 11) aus einem reibungsarmen und verschleißfesten Strangpreßprofil gebildet ist, und daß auf der Oberseite des Rohlings (1) eine Vertiefung eingeformt ist, die zum Einsetzen einer Lagerung und eines Antriebs für die Kolbenpumpe vorgesehen ist.

## Claims

1. Method of manufacturing a housing block for a hydraulic unit including
- bores (3) for the accommodation of valve inserts,
- a cylinder bore which forms the sliding surface for the piston of a piston pump,
**characterized in that** a blank (1) for the housing block is shaped in a modified die casting method by squeeze-casting or tixo-casting from a viscous, high-tensile and easy-to-machine aluminum casting alloy or aluminum wrought alloy,
**in that** the wall of the cylinder bore is provided by a rod-shaped or sleeve-shaped insert member (6; 10, 11) that is cast in the blank (1) and composed of a low-friction and wear-resistant extrusion,
and **in that** after casting the blank (1) an indentation is shaped into the top side of the blank (1) which is subsequently finished for the installation of a bearing and a drive for the piston pump.

2. Method as claimed in claim 1,
**characterized in that** an aluminum alloy, especially a material bearing, or similar to, the trade mark Al 4032, Al 4147, Al Si 17, Al Si 12, or Kayser DHT 3 is used for the insert member (6; 10, 11).

3. Method as claimed in any one of the preceding claims,
**characterized in that** a solid body, especially a cylindrical rod, is used as an insert member (6) in which the cylinder bore is made after casting.

4. Method as claimed in any one of the preceding claims,
**characterized in that** a sleeve is used as an insert member (10, 11), and a supporting element is inserted into the bore of the sleeve.

5. Method as claimed in any one of the preceding claims,
**characterized in that** a pressure-resistant material is filled into the bore of the sleeve which is easily removable after the casting operation.

6. Housing block for a hydraulic unit, including bores (3) for the accommodation of valve inserts and a cylinder bore which forms the sliding surface for the piston of a piston pump,
**characterized in that** the housing block is shaped from a blank (1) which is made in a modified die casting method by squeeze-casting or tixo-casting from a viscous, high-tensile and easy-to-machine aluminum casting alloy or aluminum wrought alloy, **in that** the wall of the cylinder bore is provided by a cast-in rod-shaped or sleeve-shaped insert member (6; 10, 11) that is composed of a low-friction and wear-resistant extrusion, and **in that** an indentation is shaped into the top side of the blank (1) which is intended for the installation of a bearing and a drive for the piston pump.

## Revendications

1. Procédé de fabrication d'un bloc-boîtier pour ensemble hydraulique, comprenant
- des alésages (3) servant à recevoir des dispositifs de valve rapportés et
- un alésage de cylindre constituant la surface frottante prévue pour le piston d'une pompe à piston,
**caractérisé**
**en ce qu'**une ébauche (1) prévue pour le bloc-boîtier est façonnée suivant un procédé de coulée sous pression modifié, par coulée sous pression ou coulée Tixo, à partir d'un alliage d'aluminium de fonderie ou d'un alliage d'aluminium de corroyage tenace, à résistance élevée et se prêtant bien à l'usinage,
**en ce que** la paroi de l'alésage cylindrique est formée au moyen d'une pièce rapportée (6 ; 10, 11) en forme de barre ou de manchon qui est mise en place dans l'ébauche (1) à la coulée et qui consiste en un profilé filé à frottement réduit et résistant à l'usure,
et **en ce qu'**après le moulage par coulée de l'ébauche (1), il est ménagé sur la face supérieure de l'ébauche (1) une partie en retrait qui est ensuite soumise à un usinage ultérieur pour la mise en place de moyens d'appui et de moyens d'entraînement pour la pompe à piston.

2. Procédé suivant la revendication 1, **caractérisé en ce que**, pour la pièce rapportée (6 ; 10, 11), on utilise un alliage d'aluminium, notamment une matière présentant la désignation commerciale Al 4032, Al 4147, Al Si 17, Al Si 12 ou Kayser DHT 3 ou analogues.

3. Procédé suivant l'une des revendications précédentes, **caractérisé en ce qu'**en tant que pièce rapportée (6), on utilise un corps plein, notamment une barre cylindrique, dans lequel l'alésage cylindrique est réalisé après la mise en place à la coulée.

4. Procédé suivant l'une des revendications précédentes, **caractérisé en ce qu'**en tant que pièce rapportée (10, 11), on utilise un manchon, un corps de soutien étant placé dans l'alésage du manchon.

5. Procédé suivant l'une des revendications précédentes, **caractérisé en ce qu'**on remplit l'alésage du manchon d'une matière résistant à la pression qui peut être ôtée facilement après le moulage.

6. Bloc-boîtier pour ensemble hydraulique, comportant des alésages (3), servant à loger des dispositifs de valve rapportés, et un alésage cylindrique constituant la surface frottante prévue pour le piston d'une pompe à piston, **caractérisé en ce que** le bloc-boîtier est réalisé à partir d'une ébauche (1) qui est façonnée suivant un procédé de coulée sous pression modifié, par coulée sous pression ou coulée Tixo, à partir d'un alliage d'aluminium de fonderie ou d'un alliage d'aluminium de corroyage tenace, à résistance élevée et se prêtant bien à l'usinage, **en ce que** la paroi de l'alésage cylindrique est formée au moyen d'une pièce rapportée (6 ; 10, 11) en forme de barre ou de manchon qui est mise en place à la coulée et qui consiste en un profilé filé à frottement réduit et résistant à l'usure, et **en ce qu'**est ménagée, sur la face supérieure de l'ébauche (1), une partie en retrait qui est prévue pour la mise en place de moyens d'appui et de moyens d'entraînement pour la pompe à piston.
